# EUROPÄISCHE PATENTANMELDUNG

(11) **EP 1 892 593 A1**
(43) Veröffentlichungstag der Anmeldung: **27.02.2008**
(21) Anmeldenummer: 06119522.8
(22) Anmeldetag: 25.08.2006
(51) Int. Cl.: G05B 19/042, H04L 12/28, G06F 3/033

(54) **Anordnung zur Steuerung von Geräten in einem Gebäude**

(71) Anmelder: Siemens Schweiz AG, 8047 Zürich (CH)
(72) Erfinder: Copley, Jonathan Miles, 6300 Zug (CH)
(74) Vertreter: Maier, Daniel Oliver

(57) **Zusammenfassung**

Die Erfindung betrifft eine Anordnung zur Steuerung von Geräten in einem Gebäude, die wenigstens eine eine gewisse Anzahl steuerbarer Schalter (11;14;20;21) aufweisende Schaltereinheit (5;6) und eine Benutzerschnittstelleneinheit (1) mit einem Anzeigefeld (2) mit Berührungseingabe umfasst. Die Schaltereinheit (5;6) und die Benutzerschnittstelleneinheit (1) sind über ein Datenkommunikationssystem (4) miteinander verbunden. Ein berührungsempfindlicher Bereich (35;36) des Anzeigefeldes (2) ist einem steuerbaren Schalter (11;14) der Schaltereinheit (5;6) von einem Benutzer interaktiv derart zuordnungsbar, dass ein durch den Schalter (11;14) steuerbares Gerät (15;18) vom Benutzer über den zugeordneten berührungsempfindlichen Bereich (35;36) des Anzeigefelds (2) steuerbar ist. Die Anordnung unterstützt Intelligentes Wohnen, indem eine flexible aber einheitliche Benutzerführung für verschiedenartige Geräte (15;18) ermöglicht wird.

## Beschreibung

Die Erfindung bezieht sich auf eine Anordnung der im Oberbegriff des Anspruchs 1 genannten Art.

Derartige Anordnungen eignen sich zur Steuerung von Geräten der Haustechnik, insbesondere zur Steuerung oder auch Regelung von Lichtquellen, Rollläden, Heiz- oder Kühlwasserventilen, Lüftungsklappen, Fenstern, Türverriegelungen und Alarmanlagen.

Eine derartigen Anordnung ermöglicht allgemein eine hohe Flexibilität bei der sogenannten Haus- oder Gebäudeautomation, bei der elektrisch gespeiste Geräte der Haustechnik, Haushaltgeräte oder Multimediageräte geschaltet werden.

Kontextabhängige Benutzerschnittstellen für sogenannte Home Automation Systeme beziehungsweise für Haus- oder Gebäudeautomation sind beispielsweise aus WO97/11448 oder US2004/0260427 bekannt.

Insbesondere in Einfamilienhäusern sind verschiedenartige elektrische Geräte und Anlagenteile oft sehr inhomogen installiert, da diese oftmals unterschiedliche Gerätegenerationen umfassen, und ausserdem von verschiedenen Anbietern oder Lieferanten in einem Gebäude eingerichtet werden. So können in einem Haus beispielsweise für Beleuchtung, Rollläden und Raumklimasteuerung getrennte Steuergeräte eingebaut sein, die unterschiedliche Bedienelemente und Bedienkonzepte aufweisen.

Der Erfindung liegt die Aufgabe zugrunde, eine Anordnung zur Steuerung und/oder Regelung von Geräten in einem Gebäude anzugeben, die eine kostengünstig implementierbare Benutzerschnittstelle umfasst, welche eine flexible aber einheitliche Benutzerführung für verschiedenartige Geräte der Hausinstallation ermöglicht. Die Anordnung soll ferner eine Aufrüstung oder Modernisierung einer bestehenden Geräteinstallation der Haustechnik ermöglichen.

Die genannte Aufgabe wird erfindungsgemäss durch die Merkmale des Anspruchs 1 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:
- Fig. 1: eine erfindungsgemässe Anordnung zur Steuerung von Geräten in einem Gebäude,
- Fig. 2: ein Datenflussdiagramm zur Konfigurierung der Anordnung,
- Fig. 3a, 3b: Darstellungen zum Konfigurierungsverfahren,
- Fig. 4: eine weitere Darstellung zum Konfigurierungsverfahren,
- Fig. 5a, 5b: zwei Beispiele für von Schaltereinheiten abhängigen Darstellungen auf einem Anzeigefeld, und
- Fig. 6: eine Darstellung zur Bedienung der Anordnung.

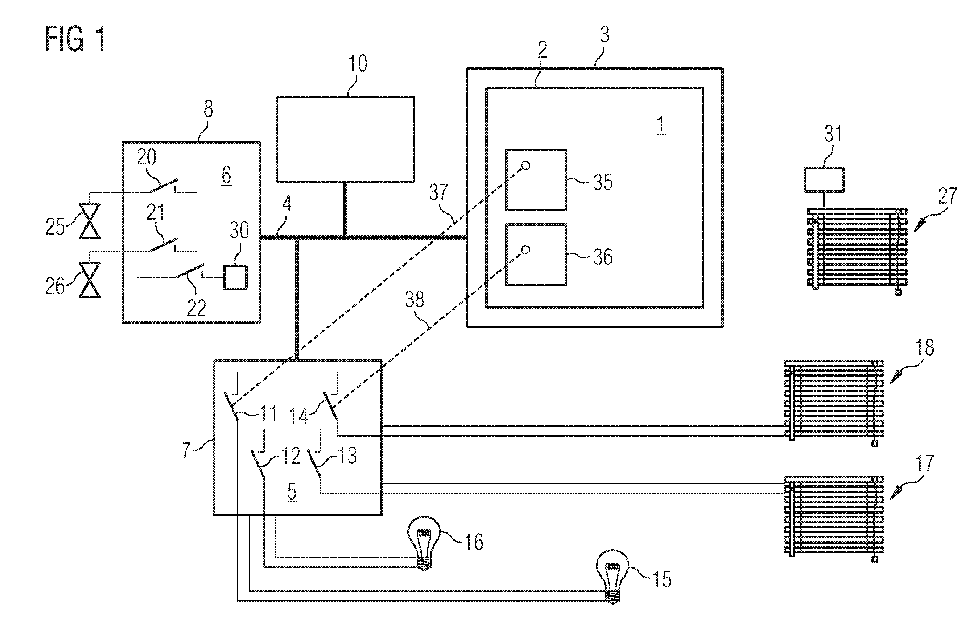

In der Fig. 1 bedeutet 1 eine Benutzerschnittstelleneinheit einer Anordnung zur Steuerung von Geräten in einem Gebäude. Die Benutzerschnittstelleneinheit 1 weist ein Anzeigefeld 2 mit Berührungseingabe auf und ist in einem ersten Gehäuse 3 angeordnet. Das erste Gehäuse 3 kann in einer Variante als Unterputz-Einbau ausgeführt sein. Die Benutzerschnittstelleneinheit 1 ist über ein Datenkommunikationssystem 4 mit einer ersten Schaltereinheit 5 und mit einer zweiten Schaltereinheit 6 verbunden. Vorteilhafterweise ist die erste Schaltereinheit 5 in einem zweiten Gehäuse 7 und die zweite Schaltereinheit 6 in einem dritten Gehäuse 8 untergebracht.

Eine kostengünstige Implementierung des Anzeigefelds 2 mit Berührungseingabe ist beispielsweise ein mehrschichtig aufgebautes Bauteil, welches in einer ersten Schicht eine transparente, berührungsempfindlichen Folie und in einer zweiten Schicht eine Flüssigkristallanzeige (Liquid Crystal Display, LCD) aufweist. Diese Technologie ist beispielsweise in einem Thermostat REV100 der Firma Siemens eingesetzt worden.

Das Datenkommunikationssystem 4 kann grundsätzlich drahtgebunden oder drahtlos implementiert sein.

Das zweite und/oder dritte Gehäuse 7 bzw. 8 kann beispielsweise auch als Schaltschrank an einer Gebäudewand angeordnet oder als Unterputz-Einbau ausgeführt sein.

In der Regel weist die Anordnung zur Steuerung von Geräten in einem Gebäude noch weitere Einheiten auf, beispielsweise Regelgeräte, die hier jedoch aus Gründen der Übersichtlichkeit nicht dargestellt sind. Beispielhaft umfasst die Anordnung auch eine mit dem Datenkommunikationssystem 4 verbundene Schnittstelleneinrichtung 10, durch welche die Anordnung mit einem Telefonnetz oder dem Internet verbunden und damit auch via Internet oder Telefon bedienbar ist.

Die beiden Schaltereinheiten 5 und 6 weisen steuerbare Schalter auf, über welche elektrisch gespeiste Geräte der Anordnung schaltbar sind. Grundsätzlich sind die steuerbaren Schalter elektrisch oder elektronisch steuerbar und mit Vorteil als elektromechanische Relais oder Halbleiterbauelemente implementiert. Die Anzahl der steuerbaren Schalter, welche die Schaltereinheit 5 oder 6 aufweist, ist grundsätzlich in weiten Grenzen auf die Bedürfnisse der Anordnung abstimmbar. In der Regel ist ein steuerbarer Schalter über elektrische Leitungen mit einem zugeordneten Gerät verbunden. Grundsätzlich kann der steuerbare Schalter in einer Variante jedoch auch drahtlos über eine weitere Einrichtung das im zugeordnete Gerät steuern bzw. ein- oder ausschalten.

Die erste Schaltereinheit 5 weist beispielhaft vier steuerbare Schalter 11, 12, 13 und 14 auf. Die über die Schaltereinheit 5 steuerbaren Geräte sind hier eine mit einem ersten Schalter 11 verbundene erste Lampe 15, eine mit einem zweiten Schalter 12 verbundene zweite Lampe 16, ein mit einem dritten Schalter 13 verbundener erster Rollladen 17 und ein mit einem vierten Schalter 14 verbundener zweiter Rollladen 18.

Die zweite Schaltereinheit 8 weist beispielhaft drei steuerbare Schalter 20, 21 und 22 auf. Die über die Schaltereinheit 5 steuerbaren Geräte sind hier ein mit einem fünften Schalter 20 verbundenes Heizwasserventil 25, ein mit einem sechsten Schalter 21 verbundenes Kühlwasserventil 26 und ein über einen siebten Schalter 22 steuerbarer dritter Rollladen 27. Der dritte Rollladen 27 ist vom siebten Schalter 22 via eine drahtlose Signalübertragungseinrichtung 30, 31 steuerbar. Ein erster Sendeempfänger 30 der Signalübertragungseinrichtung ist vorteilhafterweise in der zweiten Schaltereinheit 8 und ein zweiter Sendeempfänger 31 in unmittelbarer Nähe des dritten Rollladens 27 angeordnet.

Die Anordnung weist einen Mikroprozessor mit einem Programm auf, durch welches ein Bereich des Anzeigefeldes 2 einem Schalter der Schaltereinheit 5 oder 6 von einem Benutzer interaktiv derart zuordnungsbar ist, dass ein durch den Schalter steuerbares Gerät vom Benutzer über den zugeordneten Bereich des Anzeigefelds steuerbar ist. Im Anzeigefeld 2 sind beispielhaft ein erster Berührungsbereich 35 und ein zweiter Berührungsbereich 36 als Eingabemöglichkeit vorgesehen. Der erste Berührungsbereich 35 wurde mit Hilfe des entsprechend programmierten Mikroprozessors von einem Benutzer interaktiv dem ersten Schalter 11 zugeordnet, wobei Anweisungen für den Benutzer mit Vorteil auf dem Anzeigefeld 2 dargestellt wurden. Eine gestrichelt eingezeichnete erste Zuordnung 37 symbolisiert eine vom Mikroprozessor in der Anordnung abgespeicherte Verknüpfung des ersten Berührungsbereichs 35 mit dem ersten Schalter 11. Damit ist die mit dem ersten Schalter 11 verbundene erste Lampe 15 über den ersten Berührungsbereich 35 ein- und ausschaltbar.

In gleicher Art und Weise ist der zweite Berührungsbereich 36 mit Hilfe des entsprechend programmierten Mikroprozessors von einem Benutzer interaktiv dem vierten Schalter 14 zugeordnet worden, wobei Anweisungen für den Benutzer mit Vorteil auf dem Anzeigefeld 2 dargestellt wurden. Eine gestrichelt eingezeichnete zweite Zuordnung 38 symbolisiert eine vom Mikroprozessor in der Anordnung abgespeicherte Verknüpfung des zweiten Berührungsbereichs 36 mit dem vierten Schalter 14. Damit ist der mit dem vierten Schalter 14 verbundene zweite Rollladen 18 über den zweiten Berührungsbereich 36 ein- und ausschaltbar.

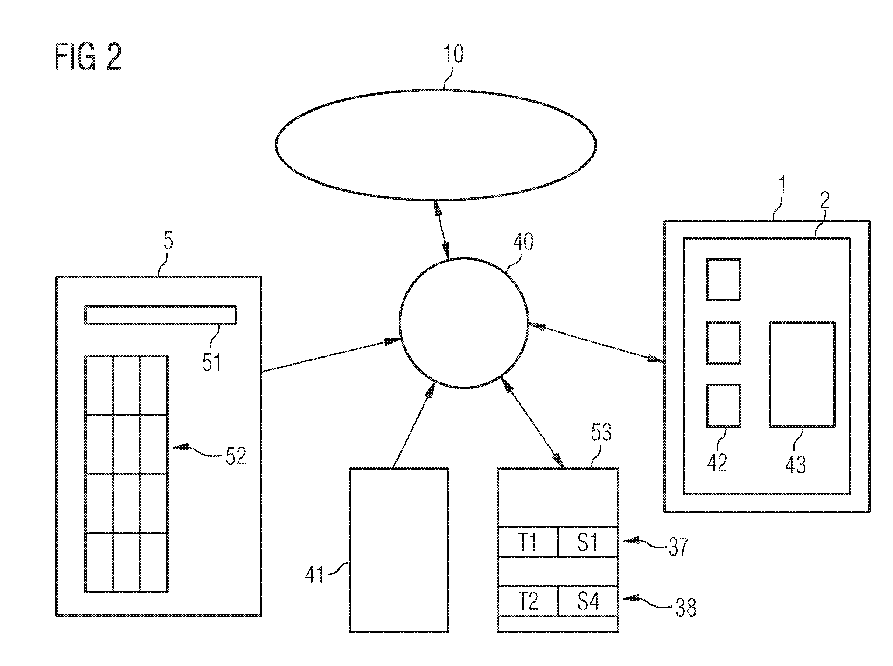

In der Fig. 2 bezeichnen 40 einen Mikroprozessor und 41 ein auf dem Mikroprozessor 40 lauffähiges Programm. Das Programm 40 ermöglicht vorteilhafterweise mehrere Aufgaben, wie optimale Aufteilung des Anzeigefeldes 2 in Berührungsbereiche und Informationsfelder zur Benutzerführung, wobei die Aufteilung mit Vorteil kontextabhängig ist. Kontextabhängig heisst hier auch, dass die Aufteilung des Anzeigefeldes 2 beispielsweise in einer Phase, in der ein gewisser als Taste nutzbarer Berührungsbereich 42 einem in der Schaltereinheit 5 angeordneter steuerbaren Schalter und damit einem Gerät zugeordnet wird, welches hilfreiche Benutzerinformation aufweist, wie beispielsweise eine im allgemeinen mehrstufige Befehlsliste 43 bzw. ein sogenanntes Menü.

Es versteht sich von selbst, dass Dialogmöglichkeiten der Benutzerschnittstelle, welche durch das die Berührungseingabe aufweisende Anzeigefeld 2 beschränkt werden, bei Bedarf ohne weiteres durch akustische Ein- und Ausgabeeinheiten ergänzbar sind. Mit Vorteil verfügt die Schaltereinheit 5 über einen Speicherbereich 51, in dem die Anzahl der steuerbaren Schalter 11, 12, 13 und 14 (Fig. 1) abgespeichert ist. Die abgespeicherte Anzahl der steuerbaren Schalter ist im Programm 41 verwendbar, so dass das Anzeigefeld 2 durch den Prozessor abhängig von der Anzahl steuerbarer Schalter, selbsttätig optimal eingeteilt wird. Mit Vorteil verfügt die Steuereinheit 5 über einen weiteren Speicherbereich 52, in dem eine Charakterisierung des mit dem Schalter 11, 12, 13 oder 14 verbundenen Geräts 15, 16, 17 beziehungsweise 18 abgespeichert ist. Die Charakterisierung beschreibt die zur Steuerung des Geräts wesentlichen Parameter, Zustände und Eigenschaften. Die Charakterisierung ermöglicht einen vom Programm 41 gesteuerten optimalen Benutzerdialog an der Benutzerschnittstelleneinheit 1.

Mit Vorteil umfasst die Anordnung auch eine Tabelle 53 in der die Zuordnungen 37 und 38 zwischen dem Berührungsbereich 35 bzw. 36 und dem steuerbaren Schalter 11 bzw. 14 abgespeichert ist.

Neben dem Anzeigefeld 2 wesentliche Mittel, durch welche die Zuordnungen 37 und 38 einerseits bei einer Inbetriebnahme- oder Konfigurierungsphase der Anordnung generierbar und veränderbar und andrerseits in einer Betriebsphase der Anordnung zur Steuerung der Geräte benutzbar sind, umfassen vorteilhafterweise den Mikroprozessor 40, das Programm 41, die Tabelle 53 und die beiden Speicherbereiche 51 und 52. Grundsätzlich können diese Mittel in der Benutzerschnittstelleneinheit 1 oder in der Schaltereinheit 5 oder 6, oder verteilt in der Benutzerschnittstelleneinheit 1 und in der Schaltereinheit 5 oder 6 angeordnet werden.

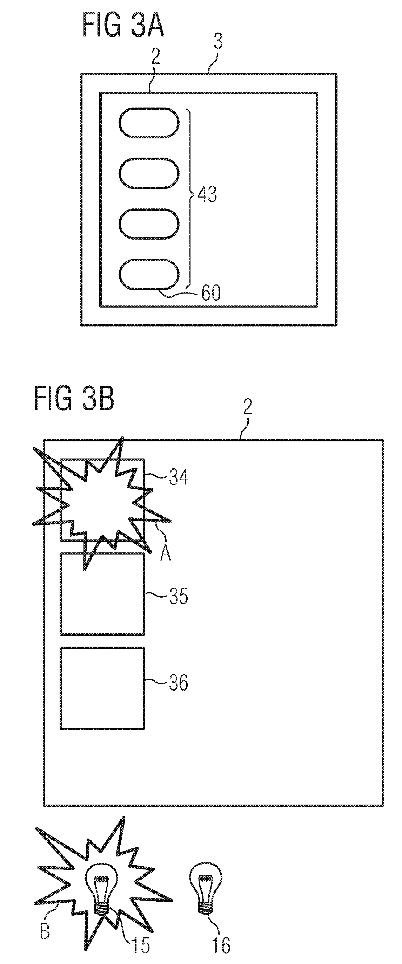

Ein vorteilhaftes Verfahren zur Inbetriebnahme der Anordnung weist im Wesentlichen folgende Phasen auf:
Die Inbetriebnahme beginnt mit einer ersten Phase, in der die Anordnung in einen Inbetriebnahmezustand gesetzt wird, was beispielsweise über eine gewisse, einzigartige Tastenkombination an der Benutzerschnittstelleneinheit 1 erreicht wird. Die besagte Tastenkombination bewirkt vorzugsweise das Anzeigen der Befehlsliste 43 im Anzeigefeld 2 (Fig. 3a). Die angezeigte Befehlsliste umfasst beispielhaft mehrere Befehlszeilen mit Berührungseingabemöglichkeit in Form von Text- oder Symbolzeilen zur Auswahl von Gerätefunktionen. Eine erste Befehlszeile 60 bezieht sich beispielsweise auf die Lichtsteuerung. Weitere Befehlszeilen beziehen sich beispielsweise auf die Heizungssteuerung, auf die Markisen, Blendschutz- oder allgemein Sonnenschutzanlagen, auf eine Schliess- und Verriegelungsfunktion für Fenster und/oder Türen, auf die Steuerung einer Sicherheitsanlage oder eine sogenannte Urlaubsfunktion. Durch die Urlaubsfunktion werden beispielsweise verschiedene Funktionen wie Lichtsteuerung, Verriegelungsfunktion, Alarmanlage und Absenkung der Heizung erfasst. Ein Antippen der entsprechenden Befehlszeile ermöglicht die Konfigurierung oder Umprogrammierung von der Befehlszeile zugeordneten Gerätefunktionen in einer zweiten Phase.

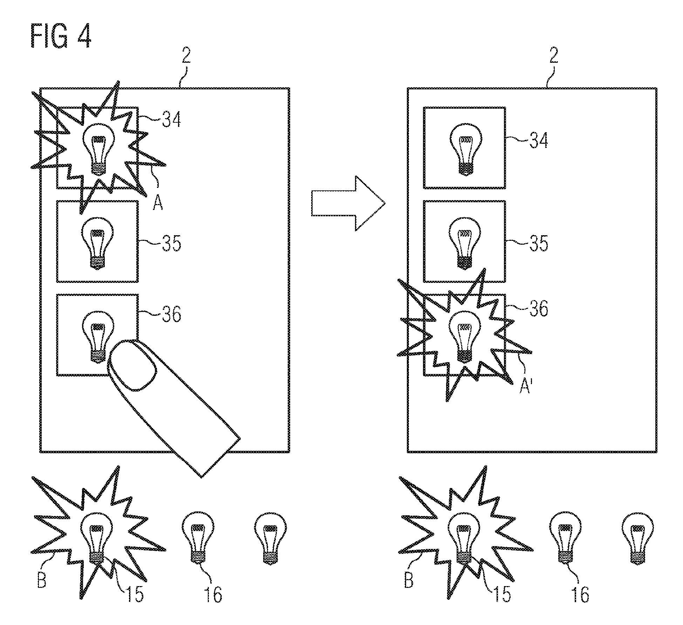

Ein Antippen der Befehlszeile 60 ermöglicht in diesem Beispiel in der zweiten Phase die Konfigurierung der Lichtsteuerung. In der zweiten Phase wird das Anzeigefeld 2, mit Vorteil selbsttätig, auf Grund der im ersten Speicherbereich 51 abgelegten Anzahl der Schalter optimal in berührungsempfindliche Bereiche aufgeteilt, wobei die Bereiche vorteilhafterweise mit Text oder Symbolen für den Bediener aussagekräftig gekennzeichnet sind. Ein Auswählen der Konfigurierung der Lichtsteuerung zeigt sich auf dem Anzeigefeld 2 an einem vorbestimmten Berührungsbereich und mit Vorteil auch an einem mit dem besagten Berührungsbereich über einen entsprechenden Schalter verknüpften Gerät. In der Fig. 2b sind die Berührungsbereiche 34, 35 und 36 des Anzeigefelds 2 und die beiden Lampen 15 und 16 dargestellt. Eine aktuell geltende Zuordnung des Berührungsbereichs 34 an die erste Lampe 15 ist in der Fig. 2b durch Symbole A und B dargestellt, wobei das Symbol A bedeutet, dass der aktuell konfigurierbare Berührungsbereich optisch beispielsweise durch Blinken oder durch einen gewissen Farbton gekennzeichnet ist. Die aktuell über den Berührungsbereich 34 steuerbare erste Lampe 15 ist beispielsweise durch Blinken gekennzeichnet, was in der Fig. 2b durch das Symbol B dargestellt ist. Die dem Berührungsbereich 34 zugeordnete erste Lampe 15 kann durch ein Antippen des zweiten Berührungsbereichs 36 dem zweiten Berührungsbereich 36 zugeordnet werden, was in der Fig. 4 durch einen Wechsel des Symbols A zum Symbol A' dargestellt ist. Eine Bestätigung der Zuordnung ist beispielsweise durch ein zweites Antippen des entsprechenden Berührungsbereichs 36 oder in einer Variante durch Betätigen einer nicht dargestellten separaten Bestätigungstaste erreichbar.

Mit Vorteil kann der konfigurierte Berührungsbereich 36 im Anzeigefeld 2 bei der Inbetriebnahme beispielsweise durch ein in einer Auswahlliste wählbares Symbol und/oder durch einen auf das zugeordnete Gerät bezogenen Namen gekennzeichnet werden.

Sinngemäss ist die zweite Phase der Inbetriebnahme grundsätzlich für jede wählbare Gerätefunktion durchführbar, wobei ein Gerät, welches sich optisch nicht wie etwa ein Lampe bemerkbar machen kann, eine aktuelle Zuordnung vorzugsweise akustisch quittiert, was beispielsweise bei Sonnenschutzanlagen durch eine wiederholte Start-Stopp-Auslösung auslösbar ist. In einer Variante wird eine Quittung des aktuell zugeordneten Geräts auf dem Anzeigefeld 2 optisch dargestellt.

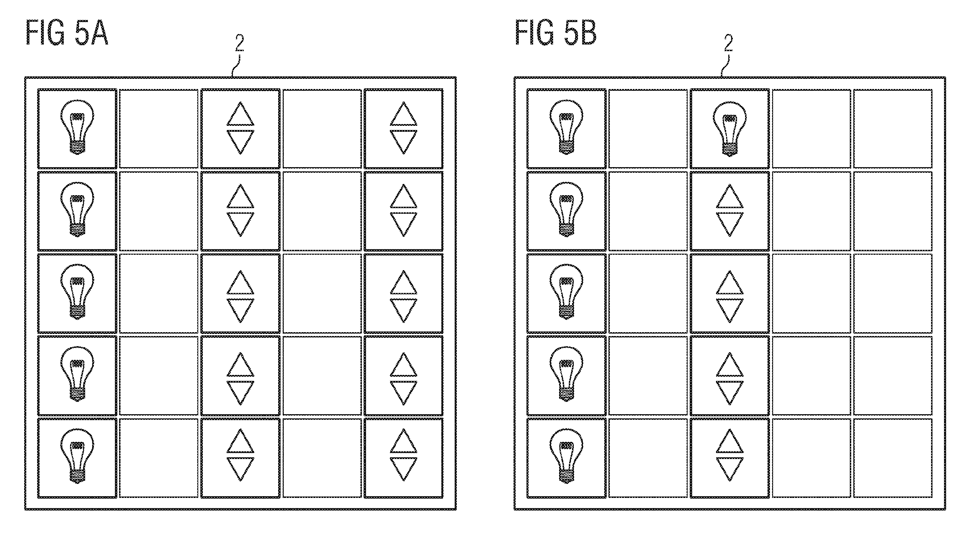

Die in den beiden Speicherbereichen 51 und 52 (Fig. 2) verfügbare Information zu den in der Schaltereinheit 5 oder 6 angeordneten Schaltern und den mit den Schalten verknüpften Geräten ist das Anzeigefeld 2 sowohl bei der Inbetriebnahme wie auch im Betrieb der Anordnung durch den vom Programm 41 gesteuerten Mikroprozessor 40 selbsttätig optimal auslegbar. In der Fig. 5a ist eine optimale Auslegung des Anzeigefelds 2 dargestellt, wenn die Schaltereinheit 5 oder 6 fünf Schalter für Lichtquellen und zehn Schalter für Markisen aufweist. Fig. 5b zeigt ein Beispiel für die Anordnung der entsprechenden Berührungsbereiche, wenn die Schaltereinheit 5 oder 6 sechs Schalter für Lichtquellen und vier Schalter für Markisen aufweist.

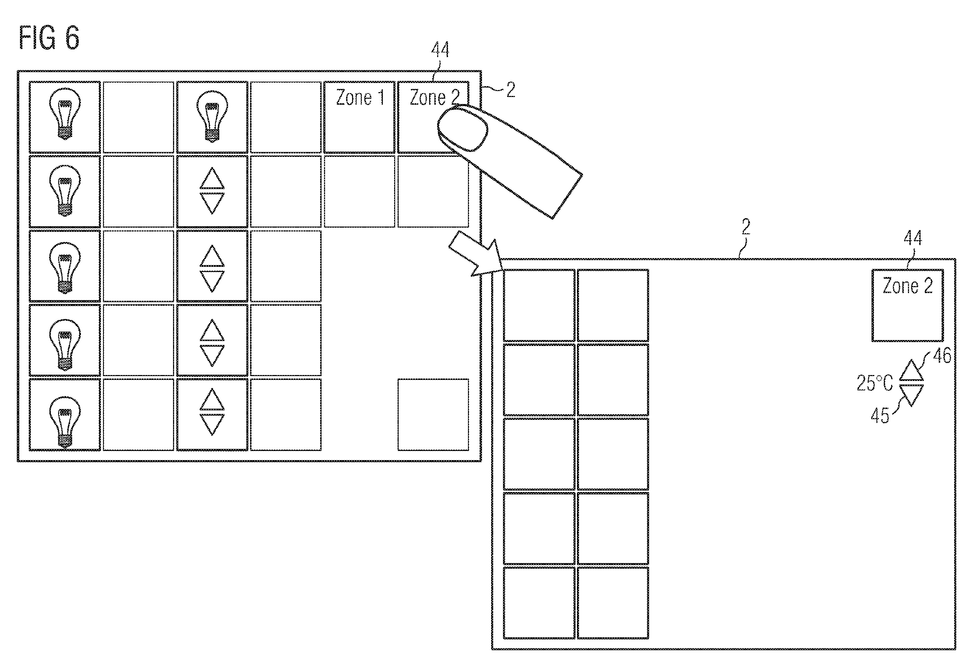

Insbesondere im Normalbetrieb der Anordnung erfordert die Bedienung der Benutzerschnittstelleneinheit 1 in gewissen Fällen mehrstufige Auswahlmöglichkeiten, so beispielsweise beim Einstellen eines Raumklima-Sollwertes oder einer Schaltuhr. In der Fig. 6 bezeichnet 44 einen weiteren, einer bestimmten Raumzone zugeordneten Berührungsbereich im Anzeigefeld 2. Ein Antippen des Berührungsbereichs 44 führt hier kontextabhängig zu einer untergeordneten Auswahlmöglichkeit, in der beispielsweise der aktuelle Sollwert der Raumtemperatur von 25°C angezeigt und zusätzliche Berührungsbereiche 45 und 46 zum Verkleinern oder Vergrössern des Sollwertes dargestellt werden.

### Bezugszeichenliste

- 1: Benutzerschnittstelleneinheit
- 2: Anzeigefeld
- 3: Gehäuse, erstes
- 4: Datenkommunikationssystem
- 5: Schaltereinheit, erste
- 6: Schaltereinheit, zweite
- 7: Gehäuse, zweite
- 8: Gehäuse, dritte
- 10: Schnittstelleneinrichtung
- 11: Schalter, erster
- 12: Schalter, zweiter
- 13: Schalter, dritter
- 14: Schalter, vierter
- 15: Lampe, erste
- 16: Lampe, zweite
- 17: Rollladen, erster
- 18: Rollladen, zweiter
- 20: Schalter, fünfter
- 21: Schalter, sechster
- 22: Schalter, siebter
- 25: Heizwasserventil
- 26: Kühlwasserventil
- 27: Rollladen, dritter
- 30, 31: Signalübertragungseinrichtung, drahtlose
- 30: Sendeempfänger, erster
- 31: Sendeempfänger, zweiter
- 34: Berührungsbereich, blinkender
- 35: Berührungsbereich, erster
- 36: Berührungsbereich, zweiter
- 37: Zuordnung, erste
- 38: Zuordnung, zweite
- 40: Mikroprozessor
- 41: Programm
- 42: Berührungsbereich, gewisser
- 43: Befehlsliste
- 44: Berührungsbereich, weiterer
- 45, 46: Berührungsbereiche, zusätzliche
- 51: Speicherbereich, erster (Anzahl Schalter)
- 52: Speicherbereich, weiterer (Charakterisierung)
- 53: Tabelle
- 60: Befehlszeile

- A, A', B: Symbol

## Patentansprüche

1. Anordnung zur Steuerung und/oder Regelung von Geräten in einem Gebäude, mit einer kontextabhängigen Benutzerschnittstelle, **gekennzeichnet durch**
eine in einem ersten Gehäuse (3) untergebrachte, ein Anzeigefeld (2) mit Berührungseinegabe aufweisende Benutzerschnittstelleneinheit (1),
wenigstens eine in einem zweiten Gehäuse (7; 8) untergebrachte, mit der Benutzerschnittstelle (1) über ein Datenkommunikationssystem (4) verbundene, eine gewisse Anzahl steuerbarer Schalter (11; 14; 20; 21) aufweisende Schaltereinheit (5; 6), und,
einen Mikroprozessor (40) mit einem Programm (41), **durch** welches ein berührungsempfindlicher Bereich (35; 36) des Anzeigefeldes (2) einem steuerbaren Schalter (11; 14) der Schaltereinheit (5; 6) von einem Benutzer interaktiv derart zuordnungsbar ist, dass ein **durch** den Schalter (11; 14) steuerbares Gerät (15; 18) vom Benutzer über den zugeordneten berührungsempfindlichen Bereich (35; 36) des Anzeigefelds (2) steuerbar ist.

2. Anordnung nach Anspruch 1, **dadurch gekennzeichnet,**
**dass** die Anzahl der Schalter über das Datenkommunikationssystem (4) von der Schaltereinheit (5; 6) an die Benutzerschnittstelleneinheit (1) übertragbar ist, und
**dass** das Anzeigefeld (2) abhängig von der Anzahl der Schalter selbsttätig optimal eingeteilt wird.

3. Anordnung nach einem vorangehenden Anspruch, **dadurch gekennzeichnet,**
**dass** ein Gerätetyp des durch den Schalter (11; 14) steuerbaren Geräts (15; 18) über das Datenkommunikationssystem (4) von der Schaltereinheit an die Benutzerschnittstelleneinheit (1) übertragbar ist, und
**dass** auf dem Anzeigefeld (2) abhängig vom Gerätetyp eine Eingabeaufforderung dargestellt wird.

4. Anordnung nach Anspruch 3, **dadurch gekennzeichnet,**
**dass** die Eingabeaufforderung ein kontextabhängiges, mehrstufiges Menu (43) ist.

5. Anordnung nach einem vorangehenden Anspruch, **dadurch gekennzeichnet,**
**dass** der einem Schalter (11; 14) zugeordnete Bereich (35; 36) des Anzeigefeldes durch ein Symbol ergänzbar ist, welches das mit dem Schalter (11; 14) steuerbare Gerät (15; 18) identifiziert.

6. Anordnung nach einem vorangehenden Anspruch, **dadurch gekennzeichnet,**
**dass** ein eine Zuordnung (37) zwischen dem Schalter (11) und dem berührungsempfindlichen Bereich (35) definierender Datensatz in einer Inbetriebnahmephase veränderbar und in einer Tabelle (53) speicherbar ist und dass der die Zuordnung (37; 38) definierende Datensatz in einer Betriebsphase zur Steuerung eines Geräts (15; 18) benutzbar ist.
